# EUROPEAN PATENT APPLICATION

(11) **EP 3 772 058 A1**
(43) Date of publication of application: **03.02.2021**
(21) Application number: 20180737.7
(22) Date of filing: 18.06.2020
(51) Int. Cl.: G10K 15/02, B60Q 5/00, H04R 1/00

(54) **DYNAMIC SOUND WAVE ADJUSTING SYSTEM OF ELECTRIC MOTOR VEHICLE**

(30) Priority: 29.07.2019 TW 108209878 U
(71) Applicant: Fames Tech-Savvy Co., Ltd., 236 New Taipei City (TW); Kwang Yang Motor Co., Ltd., Kaohsiung City (TW)
(72) Inventor: CHEN, ZHI-MING, New Taipei City 236 (TW); LU, TING-YUN, New Taipei City 236 (TW); YANG, JUN-CHEN, Kaohsiung (TW)
(74) Representative: Zeitler Volpert Kandlbinder Patent- und Rechtsanwälte Partnerschaft mbB

(57) **Abstract**

A dynamic sound wave adjusting system of an electric motor vehicle includes a signal input unit, a control unit, a microprocessor, a recording unit, a setting unit and a broadcasting unit. The setting unit can set a recording file recorded by the recording unit to be used in a specified motor vehicle status, and the signal input unit is electrically connected to an in-vehicle computer or a motor vehicle sensor for obtaining a motor vehicle status signal and transmitting the motor vehicle status signal to the control unit. The microprocessor selects or retrieves the corresponding recording files for sound mixing, and transmits the mixed sound to the broadcasting unit for playback. The microprocessor can select or retrieve the corresponding recording file according to the change of the motor vehicle status signal to achieve the effect of dynamically adjusting the mixed sound and playing different sound waves continuously.

## Description

### FIELD OF THE INVENTION

The present invention relates to the field of a dynamic sound wave adjusting system applied in an electric motor vehicle, and more particularly to the system capable of dynamically adjusting the mixed sound of a plurality of recording files according to a motor vehicle status to play different sound waves continuously.

### BACKGROUND OF THE INVENTION

In recent years, transportation means are gradually electrified and have become a mainstream of market development. For example, an electric motor vehicle has the advantages of low noise and pollution. However, the sound generated by the electric motor vehicle while travelling is relatively lower than the road traffic noise, so that it is not easy for pedestrians to find out that there is an electric motor vehicle nearby in order to dodge from danger. Obviously, the relatively low sound of the electric motor vehicle affects the safety of driving and even jeopardizes the life of blind people or pedestrians with visual impairments. Therefore, a simulated sound effect is added to the conventional electric motor vehicle, and the electric motor vehicle can generate appropriate sounds while traveling to provide a warning effect.

To overcome the aforementioned drawbacks of the conventional electric motor vehicle (other than the scooter without gear transmission), related manufacturers have developed an electric motor vehicle with gear transmissions, so that motorcycle riders can maximize the power of the electric motor vehicle with different gear transmissions. However, these electric motor vehicles are generally equipped with a single sound wave only. For example, if an electric motor vehicle plays an engine sound while traveling and a user wants to switch on a signal light before making a turn, the electric motor vehicle will stop playing the engine sound first and then switch to the direction-indicator light sound. In another example, when the electric motor vehicle is changing gears, the electric motor vehicle will stop playing the engine sound wave first and then switch playing the gear changing sound, or even ignore the change of gear and keep playing the engine sound. Therefore, the electric motor vehicle cannot actually reflect the motor vehicle status and may reduce the user's fun of riding.

In addition, almost all of the simulated sound effects of the electric motor vehicle and various different sound waves of the electric transmission vehicle are built-in audio files of the motor vehicle, and users cannot record their own personalized sound or express their personal riding characteristics. Therefore, how to record personalized sounds and allow the electric motor vehicle to generate different mixed sound waves according to a change of the motor vehicle status in order to actually reflect the motor vehicle status and improve the fun of riding will be an important subject of this invention.

### SUMMARY OF THE INVENTION

In view of the aforementioned drawbacks and deficiencies of the prior art, it is a primary objective of the present invention to provide a dynamic sound wave adjusting system applied in an electric motor vehicle, and the system is capable of recording an external recording file, selecting or retrieving a corresponding recording file according to a change of the motor vehicle status, mixing the sounds and then dynamically adjusting the mixed sound to form different sound waves for a continual playback.

To achieve the aforementioned and other objectives, the present invention discloses a dynamic sound wave adjusting system of an electric motor vehicle, and the system comprises: a signal input unit electrically coupled to an in-vehicle computer or a motor vehicle sensor of the electric motor vehicle, a control unit electrically coupled to the signal input unit, a microprocessor built in and/or electrically coupled to the control unit, a recording unit and a setting unit electrically coupled to the control unit, and a broadcasting unit electrically coupled to the microprocessor, wherein after the recording unit receives an external sound and transmits the external sound processed by signal editing to the control unit to form a plurality of recording files, and the setting unit sets each of the recording files to be used in a specified motor vehicle status, and the signal input unit transmits a signal of a motor vehicle status obtained by an in-vehicle computer or a motor vehicle sensor to the control unit directly, and the microprocessor selects or retrieves the plurality of corresponding recording files according to the signal of the motor vehicle status received by the control unit and mixes the sound and then transmits the mixed sound to the broadcasting unit for playback, so as to form a sound wave corresponding to the motor vehicle status, and the microprocessor selects or retrieves a corresponding recording file according to the signal of the motor vehicle status, so as to dynamically adjust the mixed sound and play the sound wave continuously.

In an embodiment, the control unit has a composite audio file or a plurality of audio files built in the control unit.

In an embodiment, the microprocessor retrieves a plurality of different sound ranges in the composite audio file or selects some of the plurality of audio files for sound mixing according to the signal of the motor vehicle status received by the control unit, and then transmits the mixed sound to the broadcasting unit for playback.

In an embodiment, the signal of the motor vehicle status includes but not limited to a gear signal, a start signal, an idle-speed signal, a wheel speed signal, a motor speed signal, a grip span signal, and a direction-indicator light signal.

In an embodiment, the recording file includes but not limited to a gear recording file, a start recording file, an idle-speed recording file, a motor vehicle traveling recording file, and a direction-indicator light recording file, and the composite audio file comprises but not limited to a gear sound, a start sound, an idle-speed sound, a motor vehicle traveling sound, a direction-indicator light sound, and the plurality of audio files comprises but not limited to a gear audio file, a start audio file, an idle-speed audio file, a motor vehicle traveling audio file, and a direction-indicator light audio file.

In an embodiment, the signal input unit obtains the gear signal, wheel speed, motor speed, grip span or direction-indicator light signal, and the microprocessor selects or retrieves a corresponding gear recording file and/or motor vehicle traveling recording file and/or direction-indicator light recording file, or retrieves a gear sound and/or motor vehicle traveling sound and/or direction-indicator light sound in the composite audio file, or selects a gear audio file and/or motor vehicle traveling audio file and/or direction-indicator light audio file from the plurality of audio files for sound mixing, and then dynamically adjusts the mixed sound and plays the sound wave continuously.

In an embodiment, the signal of the motor vehicle status further a reversing signal and a parking light signal.

In an embodiment, the recording file further comprises a reversing warning recording file and a parking light warning recording file, and the composite audio file further comprises a reversing warning sound and a parking light warning sound, and the plurality of audio files further comprises a reversing warning audio file and a parking light warning audio file.

In an embodiment, the system further the recording file further comprises a reversing warning recording file and a parking light warning recording file, and the composite audio file further comprises a reversing warning sound and a parking light warning sound, and the plurality of audio files further comprises a reversing warning audio file and a parking light warning audio file.

In an embodiment, the cable or wireless transmission interface is a diagnostic port or a data port of the in-vehicle computer.

Compared with the prior art, the system of the present invention is capable of recording external recording files, selecting or retrieving a corresponding recording file according to a change of the motor vehicle status, mixing the sounds and then dynamically adjusting the mixed sound to form different sound waves for a continual playback. The invention can actually reflect the motor vehicle status to improve the fun of riding.

The technical characteristics of the present invention will become apparent with the detailed description of preferred embodiments accompanied with the illustration of related drawings.

### BRIEF DESCRIPTION OF THE DRAWINGS

FIG. 1 is a schematic block diagram of the system of the present invention; and
FIG. 2 is a flow chart of the operation of the present invention.

### DESCRIPTION OF THE PREFERRED EMBODIMENTS

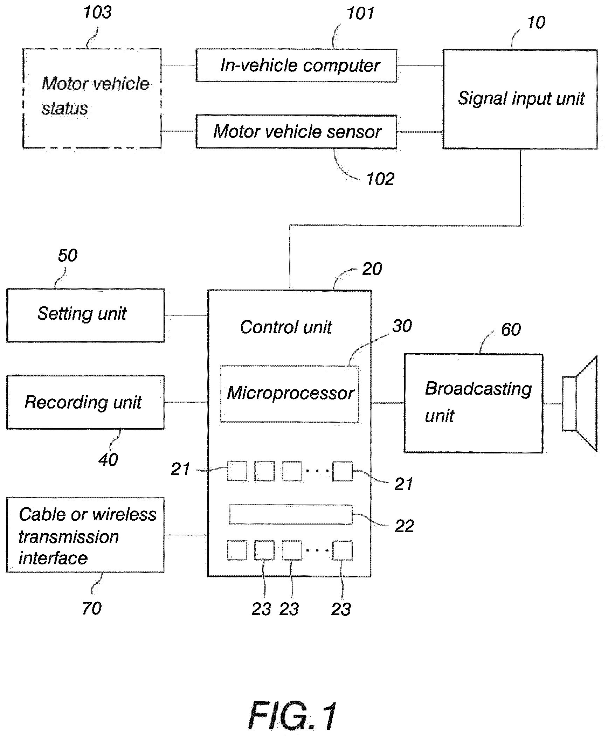

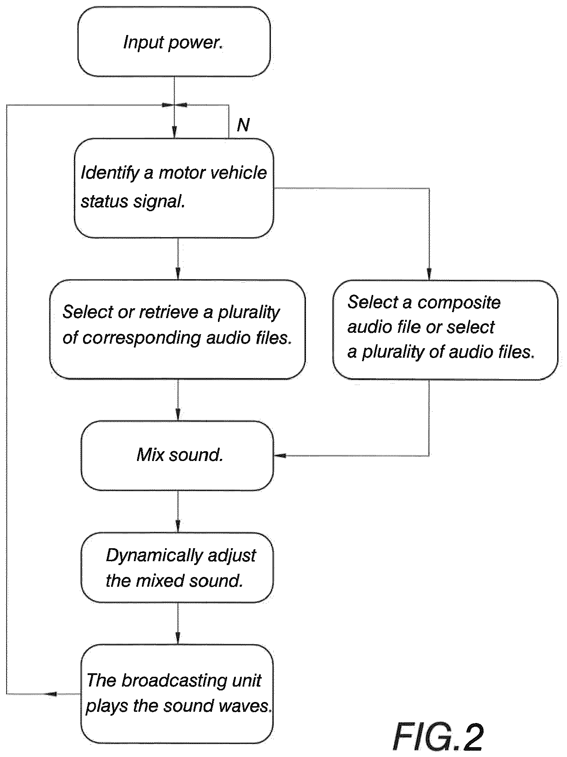

With reference to FIGS. 1 and 2 for a dynamic sound wave adjusting system of an electric motor vehicle in accordance with the present invention, the system comprises: a signal input unit 10 electrically coupled to an in-vehicle computer 101 or a motor vehicle sensor 102 of the electric motor vehicle, a control unit 20 electrically coupled to the signal input unit 10, a microprocessor 30, a recording unit 40 and a setting unit 50 separately and electrically coupled to the control unit 20, and a broadcasting unit 60 electrically coupled to the microprocessor 30. In an embodiment, the microprocessor 30 can be built in and/or electrically coupled to the control unit 20. In the figures, the microprocessor 30 is built in the control unit 20, and the broadcasting unit 60 is a speaker or a buzzer.

The signal input unit 10 obtains a motor vehicle status 103 from the in-vehicle computer 101 or the motor vehicle sensor 102 directly and transmits the motor vehicle status 103 to the control unit 20, and the control unit 20 identifies a signal of the motor vehicle status 103 inputted by the signal input unit 10 and then then transmits the signal to the microprocessor 30.

The recording unit 40 is provided for receiving, editing, and transmitting an external sound to the control unit 20 to form a plurality of recording files 21, and the setting unit 50 is provided for setting each recording file 21 to be used in a specified motor vehicle status and selecting a plurality of corresponding recording files 21 from the plurality of recording files 21 according to the signal of the motor vehicle status 103 or retrieving a portion of sound in the corresponding recording file 21 for sound mixing, and then transmitting the mixed sound to the broadcasting unit 60 for playback, and finally dynamically adjusting the mixed sound and the sound wave according to a change of the signal of the motor vehicle status 103.

In addition, the control unit 20 has a composite audio file 22 or a plurality of audio files 23 built in the control unit 20 for retrieving one or more sound ranges in the composite audio file 22 or selecting one of the audio files 23 for sound mixing according to a signal of the motor vehicle status 103 transmitted from the control unit 20, and then transmitting the mixed sound to the broadcasting unit 60 for playback, and finally dynamically adjusting the composition of the mixed sound and the sound wave according to the change of the signal of the motor vehicle status 103.

In an embodiment, the signal of the motor vehicle status 103 includes but not limited to a gear signal, a start signal, an idle-speed signal, a wheel speed signal, a motor speed signal, a grip span signal, and a direction-indicator light signal.

In an embodiment, the recording file 21 includes but not limited to a gear recording file, a start recording file, an idle-speed recording file, a motor vehicle traveling recording file, and a direction-indicator light recording file, and each of the recording files is set by the setting unit 50 and used in a specified motor vehicle status. For example, the gear recording file is set to be used when changing gears of the motor vehicle, the start recording file is set to be used when starting the motor vehicle, the idle-speed recording file is set to be used when the motor vehicle is situated at an idle speed, the motor vehicle traveling recording file is set to be used while the motor vehicle is traveling, and the direction-indicator light recording file is set to be used when the motor vehicle makes a turn.

In an embodiment, the composite audio file 22 includes but not limited to a gear sound, a start sound, an idle-speed sound, a motor vehicle traveling sound, and a direction-indicator light sound. The plurality of audio files 23 includes but not limited to a gear audio file, a start audio file, an idle-speed audio file, a motor vehicle traveling audio file, and a direction-indicator light audio file.

For example, the signal input unit 10 obtains the gear signal, wheel speed signal, motor speed signal, grip span signal or direction-indicator light signal. When the motor vehicle reduces the speed, switches to a lower gear, and turn on the direction-indicator light in order to make a turn, the microprocessor 30 selects or retrieves the corresponding gear recording file and/or motor vehicle traveling recording file and/or direction-indicator light recording file, or retrieves the gear sound, motor vehicle traveling sound and direction-indicator light sound of the composite audio file 22, or selects one from the gear audio file, motor vehicle traveling audio file and direction-indicator light audio file of the audio files 23, and the aforementioned three are performed with sound mixing, and then the mixed sound is transmitted to the broadcasting unit 60 for playback, so as to form the required sound wave for reducing the speed, switching the gear, and turning on the direction-indicator light to make the turn.

When the motor vehicle is at an idle speed, the microprocessor 30 selects or retrieves the corresponding idle-speed recording file, or retrieves the idle-speed sound of the composite audio file 22, or selects the idle-speed audio file from the plurality of audio files 23, and then the motor vehicle starts changing the gear and moving forward. The microprocessor 30 selects or retrieves the corresponding gear audio file and motor vehicle traveling audio file, or selects the gear sound and motor vehicle traveling sound in the composite audio file 22, or selects the gear audio file and motor vehicle traveling audio file from the plurality of audio files 23 according to the change of the motor vehicle status, and then mixes the sounds and transmits the mixed sound to the broadcasting unit 60 for playback, so as to form the traveling and changing gear sound of the motor vehicle.

Therefore, the microprocessor 30 can select or retrieve the corresponding recording file 21, or retrieve a plurality of different sound ranges, or select a plurality of different audio files 23 according to the change of the signal of the motor vehicle status 103 to dynamically adjust the composition of mixed sounds, form different sound waves, and play the sound waves continuously, so as to actually reflect the motor vehicle status.

Of course, the microprocessor 30 can also select or retrieve the corresponding recording file 21, or retrieve a sound range, or select a different audio file 23 according to the signal of the motor vehicle status 103 to dynamically adjust the number of times, frequency, and volume for the playback of the plurality of sound waves. For example, when the motor vehicle is traveling normally, the signal input unit 10 obtains a motor vehicle status 103 which keeps accelerating the motor vehicle, and the microprocessor 30 selects or retrieves the corresponding motor vehicle traveling recording file, or retrieves the motor vehicle traveling sound in the composite audio file 22, or selects the motor vehicle traveling audio file from the plurality of audio files 23, and directly transmits the information to the broadcasting unit 60 for playing the sound relative to the speed of the traveling vehicle and adjusts the volume of the sound according to the speed of the motor vehicle.

In another example, when the motor vehicle is at an idle speed, the signal input unit 10 obtains the motor vehicle status 103 which is an idle-speed status, and the microprocessor 30 selects or retrieves the corresponding idle-speed recording file, or retrieves the idle-speed sound in the composite audio file 22, or selects the idle-speed audio file from the plurality of audio files 23, and then directly transmits the information to the broadcasting unit 60 to play the sound wave corresponding to the motor vehicle status 103 of an idle speed. If the time of the idle speed of the motor vehicle is too long, then the microprocessor 30 will drive the broadcasting unit 60 to repeat the playback of the idle-speed recording file, the idle-speed sound, or the idle-speed audio file.

In addition to the aforementioned motor vehicle statuses, the signal of the motor vehicle status 103 further comprises a reversing signal and a parking light signal; the recording file 21 further comprises a reversing warning recording file and a parking light warning recording file; the composite audio file 22 further comprises a reversing warning sound and a parking light warning sound; and the plurality of audio files 23 further comprises a reversing warning audio file and a parking light warning audio file.

Similarly, when the motor vehicle is reversing, the signal input unit 10 obtains a motor vehicle status 103 which is a reversing status, and the microprocessor 30 selects or retrieves the motor vehicle traveling recording file and the reversing warning recording file, or retrieves the motor vehicle traveling sound and the reversing warning sound in the composite audio file 22, or selects the motor vehicle traveling audio file and the reversing warning audio file from the plurality of audio files 23 for sound mixing, and then transmits the mixed sound to the broadcasting unit 60 for playback, so as to form the sound wave of the motor vehicle status 103 which is the reversing status.

In addition, the composite audio file 22 and the plurality of audio files 23 can be different types of files such as monophonic files, chord files, sound files, or music files, so that after the number of times, the frequency, and the volume of the playback of various different sound waves have been dynamically adjusted, the actual motor vehicle status 103 can be reflected.

To facilitate users to update the composite audio file 22 or the plurality of audio files 23, the system further comprises a cable or wireless transmission interface 70 electrically coupled to the control unit 20, so that the composite audio file 22 or the plurality of audio files 23 in the microprocessor 30 can be updated by an external device through the cable or wireless transmission interface 70 to improve the convenience of use.

In the aforementioned cable or wireless transmission interface 70, the system of the present invention is electrically coupled to the in-vehicle computer 101, so that the cable or wireless transmission interface 70 can be the original diagnostic port or data port of the in-vehicle computer 101. In other words, related users, manufacturers, or repair shops can use the original diagnostic port or data port of the in-vehicle computer 101 as the cable or wireless transmission interface 70 to load or update the composite audio file 22 or the plurality of audio files 23 and achieve the same effect as above.

While the invention has been described by means of specific embodiments, numerous modifications and variations could be made thereto by those skilled in the art without departing from the scope and spirit of the invention as set forth in the claims.

## Claims

1. A dynamic sound wave adjusting system of an electric motor vehicle, comprising: a signal input unit (10) electrically coupled to an in-vehicle computer (101) or a motor vehicle sensor (102) of the electric motor vehicle, a control unit (20) electrically coupled to the signal input unit (10), a microprocessor (30) built in and/or electrically coupled to the control unit (20), a recording unit (40) and a setting unit (50) electrically coupled to the control unit (20), and a broadcasting unit (60) electrically coupled to the microprocessor (30), wherein after the recording unit (40) receives an external sound and transmits the external sound processed by signal editing to the control unit (20) to form a plurality of recording files (21), and the setting unit (50) sets each of the recording files (21) to be used in a specified motor vehicle status, and the signal input unit (10 transmits a signal of a motor vehicle status (103) obtained by an in-vehicle computer (101) or a motor vehicle sensor (102) to the control unit (20) directly, and the microprocessor (30) selects or retrieves the plurality of corresponding recording files (21) according to the signal of the motor vehicle status (103) received by the control unit (20) and mixes the sound and then transmits the mixed sound to the broadcasting unit (60) for playback, so as to form a sound wave corresponding to the motor vehicle status (103), and the microprocessor (30) selects or retrieves a corresponding recording file (21) according to the signal of the motor vehicle status (103), so as to dynamically adjust the mixed sound and play the sound wave continuously.

2. The dynamic sound wave adjusting system of an electric motor vehicle as claimed in claim 1, wherein the control unit (20) has a composite audio file (22) or a plurality of audio files (23) built in the control unit (20).

3. The dynamic sound wave adjusting system of an electric motor vehicle as claimed in claim 2, wherein the microprocessor (30) retrieves a plurality of different sound ranges in the composite audio file (22) or selects some of the plurality of audio files (23) for sound mixing according to the signal of the motor vehicle status (103) received by the control unit (20), and then transmits the mixed sound to the broadcasting unit (60) for playback.

4. The dynamic sound wave adjusting system of an electric motor vehicle as claimed in claim 3, wherein the signal of the motor vehicle status (103) comprises but not limited to a gear signal, a start signal, an idle-speed signal, a wheel speed signal, a motor speed signal, a grip span signal, and a direction-indicator light signal.

5. The dynamic sound wave adjusting system of an electric motor vehicle as claimed in claim 4, wherein the recording file (21) comprises but not limited to a gear recording file, a start recording file, an idle-speed recording file, a motor vehicle traveling recording file, and a direction-indicator light recording file, and the composite audio file (22) comprises but not limited to a gear sound, a start sound, an idle-speed sound, a motor vehicle traveling sound, a direction-indicator light sound, and the plurality of audio files (23) comprises but not limited to a gear audio file, a start audio file, an idle-speed audio file, a motor vehicle traveling audio file, and a direction-indicator light audio file.

6. The dynamic sound wave adjusting system of an electric motor vehicle as claimed in claim 5, wherein the signal input unit (10) obtains the gear signal, wheel speed, motor speed, grip span or direction-indicator light signal, and the microprocessor (30) selects or retrieves a corresponding gear recording file and/or motor vehicle traveling recording file and/or direction-indicator light recording file, or retrieves a gear sound and/or motor vehicle traveling sound and/or direction-indicator light sound in the composite audio file (22), or selects a gear audio file and/or motor vehicle traveling audio file and/or direction-indicator light audio file from the plurality of audio files (23) for sound mixing, and then dynamically adjusts the mixed sound and the sound wave.

7. The dynamic sound wave adjusting system of an electric motor vehicle as claimed in claim 4, wherein the signal of the motor vehicle status (103) further comprises a reversing signal and a parking light signal.

8. The dynamic sound wave adjusting system of an electric motor vehicle as claimed in claim 7, wherein the recording file (21) further comprises a reversing warning recording file and a parking light warning recording file, and the composite audio file further comprises a reversing warning sound and a parking light warning sound, and the plurality of audio files (23) further comprises a reversing warning audio file and a parking light warning audio file.

9. The dynamic sound wave adjusting system of an electric motor vehicle as claimed in any one of claims 1 to 8, further comprising a cable or wireless transmission interface (70) electrically coupled to the control unit (20), so that the composite audio file (22) or the plurality of audio files (23) can be updated by an external device through the cable or wireless transmission interface (70).

10. The dynamic sound wave adjusting system of an electric motor vehicle as claimed in claim 9, wherein the cable or wireless transmission interface (70) is a diagnostic port or a data port of the in-vehicle computer (101).
